# EUROPEAN PATENT APPLICATION

(11) **EP 2 607 093 A1**
(43) Date of publication of application: **26.06.2013**
(21) Application number: 11818010.8
(22) Date of filing: 05.07.2011
(51) Int. Cl.: B42D 15/10, B41M 3/14, G07D 7/20

(54) **METHOD FOR AUTHENTICITY ASSESSMENT EASILY PERFORMED BY ORDINARY PEOPLE USING PRINTED MINUTE IDENTIFICATION MARK**

(30) Priority: 15.04.2011 JP 2011103830; 04.04.2011 JP 2011093467; 03.12.2010 JP 2010283691; 17.08.2010 JP 2010196147
(71) Applicant: Hirayama, Sadahiro, Tokyo 145-0066 (JP); Miwa, Tatahiro, Kooriyama-shi, Fukushima 963-8822 (JP)
(72) Inventor: Hirayama, Sadahiro, Tokyo 145-0066 (JP); Miwa, Tatahiro, Kooriyama-shi, Fukushima 963-8822 (JP)
(74) Representative: Isarpatent
(86) International application number: PCT/JP2011/065915
(87) International publication number: WO 2012/023363

(57) **Abstract**

There has been no method for authenticity assessment which can be performed by ordinary people using an identification mark which absolutely cannot be duplicated. A minute mark is printed on a medium as an identification mark. An image of the identification mark having a minute shape which is formed by fixing a printing substance and which cannot be artificially controlled are memorized, and the image are stored together a serial number of the article as a master image. The article is placed on the market together with a warranty card including the identification mark. An ordinary person gets access to the webpage of an authenticity assessment management center, transmits the serial number of the target article, magnifies the identification mark on the warranty card by a microscope, captures an image of the identification mark with a camera-equipped cell-phone, and then transmits the image to the authenticity assessment management center. The management center compares the image and the stored master image to assess authenticity on the basis of whether or not the micro shapes of the marks are identical. The results of the assessment are sent back to the transmission source, and thus, an ordinary people can obtain the authenticity assessment result.

## Description

### Technical Field

This invention is concerning the authentication method by a small identification mark the shape of which is humanly uncontrollable and easily operated by people in general.

### Background Art

Various anti-counterfeit technologies have been developed and utilized for printed matters such as paper money, securities, personal identification card, driver's license, or certificates for brand articles.
However, as recent digital technology development is significant, high grade copy is easily obtained by high quality scanner or digital camera and printer so that it has become more and more difficult to distinguish between genuine articles and counterfeit ones by human eyes. To cope with these counterfeiting technologies, the more complex high technologies to prevent counterfeiting have been developed. Examples are micro letters and patterns, high grade hologram, special printing ink, paper with complicated watermark.

These are all anti-forgery technologies and not technologies for authentication of articles. Printed matters with anti-counterfeiting processing are easily judged as genuine or counterfeit by professionals but it is very difficult for people in general to judge and authenticate counterfeited articles once they are forged. Because, people in general have usually no idea about specification of genuine articles nor genuine certificate for genuine articles so that they cannot compare the genuine and the counterfeit.

There are not many of the technologies which make it easy for people in general to authenticate printed matters. One of example is such a system where some mark with special feature, e.g., seal impression, photograph of face, signature, is put certifying genuineness on the printed matters such as : certificate for bag, wallet, clothes, watch, glasses, electric apparatus, etc., passport, personal identification card, cash card, credit card, driver's license, diploma, securities, certificate for jewelry, pedigree of farm animal or pet, and people in general read the mark with mobile camera phone and send them to database managed by the manufacturer of the certificate of the article, and then judgment of the genuine or counterfeit is conducted by comparing the sent mark and the mark stored in the database. The fatal defect of this kind of system is that if the identification mark is accurately copied, it is impossible to judge the genuineness and authenticate the article.

### Citation List

### Patent Literature

Following patent literatures 1 to 7 are precedent technical literatures which were cited in the research report for the patent application (No.2010-196147), whose inventors as well as applicants are the same as this patent application, and also for which priority claim has been made in this patent application, based on the Japan Patent Office's project to support small companies for precedent patent research.
PTL1: Japanese Patent Application Publication No.2007-257491
   The above patent is an authentication method of paper money where paper money is photoed, its image is transmitted through internet to database of the authentication center, the transmitted image is compared with the stored distinctive information of genuine paper money such as pattern of image, hologram, bar pattern, micro letters, etc.
PTL2: Japanese Patent Application Publication No.2009-159474
   The above patent is an authentication method of articles where the image of printed identification information which is gradation information code of more than 2 bits embeded in printed matters, put on the object articles, is photoed by mobile camera phone, its image is transmitted through internet to database of the authentication center, information is decoded, and the decoded information is compared with the stored data of identification of genuine articles.
PTL3: Japanese Patent Application Publication No.2007-293405
   The above patent is an authentication method of papers where the object paper is photoed by mobile camera phone, its identification information for authentication (e.g., ink reactive to ultra-violet light, optical pattern, printed pattern difficult to be forged, etc.) is transmitted through internet to database of the authentication center, and is compared with the stored data of identification information of genuine paper.
PTL4: Japanese Patent Application Publication No.2008-129564
   The above patent is a method of lens performance design to make it capable for camera to take a picture with very large magnification being easily attached to lens portion of the digital camera.
PTL5: Japanese Patent Application Publication No.2006-260507
   The above patent is an authentication method by irradiating special wave length light on the mark printed by special ink.
PTL6: Japanese Patent Application Publication No.2006-195934
   The above patent is an authentication method for paper money by checking whether watermark exists or not on the paper.
PTL7: Japanese Patent Application Publication No.2002-517841The above patent is an authentication method by presenting numerical code by respective human face.

Following patent literatures 8 to 13 are precedent technical literatures which were cited in the notice of reasons for refusal as the result of the 1^{st} examination conducted by Japanese Patent Office for the patent application (No.2010-283691), whose inventors as well as applicants are the same as this patent application, and also for which priority claim has been made in this patent application.
PTL8: Japanese Patent Application Publication No.H6-183192
   The above patent is an authentication method by utilizing the phenomenon that the printed micro letters line appears to be real line when it is copied.
PTL9: Japanese Utility Model Application No.S56-127134
   The above Utility Model application is as same as PTL8.

In all of the above patent literatures1 through 9, there is no concept or component which is the core of this patent application invention and that the humanly uncontrollable microscopic pattern of printed materials fixed on a print medium is made an identification mark for authentication which is impossible to be copied.
PTL10: Japanese Patent Application Publication No.2005-10581
   The above patent is an authentication method by identifying articles by utilizing all of information of pattern features on all of small surface area of interest observed, after reading microscopic features (random pattern) in the small area of interest which is impossible to be reproduced as such features are inherent in all of material surface. Further, it is stated that the protection of material surface in the small area of interest is essential since the method utilizes microscopic features on the surface of materials.
   In the above patent literature 10, there is no concept or component of invention in regard to Claim 1 of this patent application, i.e., printing small identification mark of specific shape utilizing printing material and medium to make the mark having significant features of microscopic patterns which is humanly uncontrollable (by this printing process, the difficulty of need of high magnification microscope can be avoided in the case of reading very minute random patterns) .
   Further, there is no concept or component of invention in regard to Claim 2 of this patent application, i.e., capability of article authentication by comparing the microscopic patterns and judging matching the patterns only with a portion of the contour line of identification mark. Further, there is no concept or component of invention in regard to Claim 3 of this patent application, i.e., no need of protection of material surface in the small area of interest.
   Further, there is no concept or component of invention in regard to Claim 4 of this patent application, i.e., utilization of microscope, mobile phone and internet communication.
   Further, there is no concept or component of invention in regard to Claim 5 of this patent application, i.e., easily searching small identification mark by human eyes.
   These concepts or components provided by this patent application invention totally resolve all the problems associated in the patent literature 10.
PTL11: Japanese Patent Application Publication No.2004-102562
   The above patent is an authentication method for paper by comparing random patterns made by plant fibers got un-uniformly entangled each other.
   The comparison between this PTL11 and this patent application invention is same as described for PTL10.
PTL12: Japanese Patent Application Publication No.2007-213148
   The above patent is an authentication method for paper or card by comparing random patterns on their surfaces made by plant fibers got un-uniformly entangled each other or inherent characteristic unevenness of the each card.
   The comparison between this PTL12 and this patent application invention is same as described for PTL10.
PTL13: Japanese Patent Application Publication No.2009-172811
   The above patent is an authentication method for printed matters by comparing features of a little dislocation between foil and printed patterns which is unavoidable when foil is put on the surface of printed matters.
   The comparison between this PTL13 and this patent application invention is same as described for PTL10.

### Summary of Invention

### Technical Problem

In any article authentication system, if identification mark can be copied or reproduced by some methods so that many of associated certificate in the form of paper or card can be reproduced, many of counterfeit articles associated with such reproduced certificates can be produced. Consequently such identification mark cannot be useful for the method of article authentication.

In regard to identification mark for article authentication, if a mark of such feature exists as it cannot be reproduced by any methods, in other words, if it is reproduced by any methods, it becomes different identification mark, such an identification mark is the ultimate one for article authentication. Further if the authentication can be easily performed not only by professionals but by people in general, it means that people in general obtained an ultimate authentication method. So far there has been no such an identification mark and method in the world.

If an identification mark for authentication method after it is printed, is different each other unit by unit, and also can never be reproduced to be the same as original by any methods, the identification mark is guaranteed to be the one and only mark in the world.
If such an identification mark can be easily judged to be genuine or counterfeit by general equipment, such as mobile phone with camera and/or personal computer, held by normal people in general, it will bring about great effects on article authenticity judgment by people in general against counterfeit articles.
If a genuine identification mark of such feature is printed directly on the object articles for authentication, or on the certificates associated to the object articles, the articles or associated certificates with such an identification mark can be easily authenticated to be genuine as the one and only identification mark. This means that the object articles have the absolute genuine certificate. Meanwhile, if the identification mark is judged to be counterfeit, the object articles or associated certificates can be easily judged to be counterfeit too by anybody.
The authentication technology of identification mark with this feature has not existed in the past.

### Solution to Problem

### 1. Summary of invention

This invention is a method of article authentication where a small printed identification mark associated with the object article is magnified by people in general by such means as loupe, microscope, zooming, close-up, or magnifying functions in camera, and then the magnified identification mark is photoed by mobile camera phone or digital camera, and then it is transmitted to the database of an authentication authority together with product number of the object article, and then the authentication authority compares the transmitted image with the master image of the small identification mark which has been printed, magnified, photoed, and stored prior to shipment to the market, and then the authentication authority judges the genuineness of the transmitted mark by coincidence degree between the two images, and then the result of authentication is returned to the people in general who transmitted the image of identification mark.

The other case of the method of the authentication is where only the product number of the object article is transmitted to database of an authentication authority by people in general, and then the authentication authority searches in the database the related master image of the small identification mark by the received product number and transmits it to the people in general, and then the people in general display the received master image of the small identification mark on the mobile phone or personal computer, and personally judge the genuineness of the article by comparing the received master image with the microscopic image of the identification mark associated with the object article.
The difficult problem of prevention of counterfeiting articles can be fundamentally resolved by this invention.

### 2. Features of printed mark

In regard to printed matters, the shape and color which is printed with human intention can be reproduced. Therefore they can be forged by copy or reproduction. Consequently the shape and color printed with human intention is not appropriate for the measurement standard for identification judgment.
Further, in regard to printed color, it is extremely difficult to measure real color. Since color printed is basically reflected light, the color printed is changed by the feature of projected light and also the feature of light receiving equipment. So color itself is not appropriate for the measurement standard for identification judgment. If there is such a printed matter which is produced uncontrollably by human intention, i.e., with no relation to human intention, and the shape of which is different each other and respectively has independent feature because of humanly uncontrollable production, such a printed matter can be made the measurement standard for identification judgment, i.e., the identification mark, and such an identification mark can be guaranteed to be the one and only identification mark in the world.
Does such a printed matter exist today?

While there are several methods of printing such as offset, photogravure, letterpress, screen, ink jet, all of them make printing ink adhering on print medium by putting ink with a printing pattern or spraying it in the form of small dots of various sizes.

In the case of color printing, the shape or color intended to be presented for visual observation is formed by accumulation of many small patterns or dots with single color respectively. The printing ink of these patterns or dots is put being spattered, mixed, and overlapped, and adhered on the printing medium to be viewed by human eyes just as intended in terms of shape and color. However, if they are observed in microscopic way, their shape printed by putting these ink small patterns or dots on the printing medium is different each other sheet by sheet even for the same printed matters so that human can never control and keep the microscopic shape constant.

Printing ink is liquid and partially penetrated into printing medium right after being put on the printing medium and being dried and adhered on the printing medium as a whole. The ink spreads into the printing medium until it dries up and adheres on the medium. Since the way for ink to spread depends on its affinity for printing medium, the fiber condition of printing medium at the minute position where printing ink is put by printing pattern or dot, temperature and humidity of air and printing medium, etc., it cannot be controlled by human. Consequently the way of spread of ink for printing pattern and dot for respective printed matters has special features respectively different among each other. Further, to generate object color on the printing medium for visual observation, patterns or dots with ink of a single color of several different kinds are put and mixed on the printing medium several times. The mixing feature of patterns and dots with different color for each of printed matters are microscopically different because of the humanly uncontrollable position shift between patterns or dots so that it is impossible for human to control the mixing features for each of same printed matters. Also the feature of ink juts or loss when ink is put on printed medium with patters or dots is not controllable by human. In the case of printing method of jetting ink particles like ink jet printer, it is impossible to precisely control the position for each ink particle to reach on the printing medium.

As the result of phenomena mentioned above, if ink patterns or dots which compose minute shapes at the same specific position on the each of printed matters which are simultaneously printed with the same printing machine are magnified and observed, the shape of ink patterns or dots has uncontrollable randomness so that each of them is different each other. It is impossible to artificially print the same microscopic shape of ink patterns or dots. Since it is impossible to print the same microscopic shape of ink patterns or dots when the same printed matters are made even with the same printing machine, it is consequently impossible to make the microscopically same copy even if how much precisely printing method is used. Making use of this nature of printing, an identifier which is absolutely impossible to be copied or reproduced i.e. an identifier of one and only existence in the world can be created by microscopic shape of printed matters.

### 3. Definition for coincidence and difference of shape

Coincidence and Difference of the same printed minute marks between the same printed matters are discussed here so that they should be defined. First, in regard to the size of the mark, even if the size is different, the mark is defined to be the same as far as the shape is similar figure. Since the image of an identifier with many different magnification and different types and display sizes of mobile camera phones are transmitted and compared as mentioned later, the identifier marks are defined to be the same shape if the shape is similar each other even though the mark sizes are different. Or, although the size of the master mark which is transmitted from the data base of the authentication center to the display of the mobile phone or PC of ordinary people and the size of the mark which is observed by ordinary people through microscope, is of course different, the identifier marks are defined to be the same shape if the shape is similar each other even though the mark sizes are different.

### 4. Size of identifier

In regard to the size of identifier, the entire identifier must be viewed in the display of mobile phone in order to recognize the position of the part being observed in entire identifier, and at the same time it must be magnified in order to enough recognize the microscopic difference of shapes for the observed part. So, the size of the identifier mark must be enough small. Such identifiers are magnified by loupe or microscope (hereinafter collectively called microscope) until the difference of microscopic shape between respective identifier marks is recognized by eye sight. Under these conditions, the shape of same identifiers, if printed matters are different, particularly the microscopic shape of contour line along with outside and inside of the identifier mark (hereinafter collectively called as contour line) has enough different features so that each printed matter is easily recognized to be different.

On the other hand, the identifier mark in the same printed matter, even if it is photoed in the different lighting conditions or different camera, does not lose its specific feature by shape distortion or color fade since the feature is enough significant. Particularly feature of contour line shape is kept same even if distortion is occurred since the order of up and down sequence along with the contour line could not be changed. Consequently the respective printed matters can be easily judged as same or different by comparing the image of this identifier mark with the corresponding one photoed and stored beforehand in the database.

Meanwhile, if the size of identifier mark is too small, it will be difficult to find the location of the identifier by eyesight. The minimum size to be easily found by eyesight would be 0.2-0.3mm depending on individual eyesight.

The image of identifier mark magnified by microscope is photoed by a mobile camera phone to be transmitted through internet. Or a master image stored in the database in the authentication center is received through internet by mobile camera phone or personal computer. The screen width size of mobile camera phone is about 25mm in the case of small size. For authenticate the identifier, it is desirable for the identifier image magnified by microscope to occupy more than 1/2 of the screen size of the mobile camera phone. Because, to recognize the shape difference between the magnified but small identifiers occupying only a little part of the screen is to utilize the entire screen ineffectively.

### 5. Requirements of identifier mark for ordinary people to easily authenticate article

Based on what have been discussed above, in order for ordinary people to use a printed identifier mark to easily authenticate an article at any time and place, requirements of identifier are as described below:
(1) The size of identifier should be enough small in order for the difference of the identifier at its each part between the shapes of printed patterns or dots (hereinafter called microscopic shape) when magnified enough by microscope to be significant having significant features. At the same time, the size of identifier should be enough small in order for the entire image of the magnified identifier to be displayed within the screen of a mobile camera phone.
(2) The size of identifier should be large enough for ordinary people with ordinary eye sight to easily find the location of the identifier mark. It is desirably more than 0.2mm.
(3) The microscope to magnify the identifier mark can be as low price one as for ordinary people to easily purchase it. Or even if the article manufacturer attaches the microscope to the article certificate with no price, the cost for the manufacturer should be negligible compared to the cost of the article. In other words, the microscope can be simple one without large magnification and high resolution. In regard to the method to magnify the identifier mark, you can utilize some of microscope, loupe, and also close-up lens and zooming and display magnifying function all embedded in the mobile phone to obtain the necessary magnification and resolution. These magnification methods for the identifier mark are collectively called microscope.
(4) When the image of the identifier magnified by microscope or the image of the master identifier transmitted and received is observed on the display of a mobile camera phone, the significant microscopic feature of each identifier shape composed of patterns or dots can be easily seen as far as the entire image of the identifier is magnified to the extent of at least about half of the display even if the size of the display of the phone is as small as 25mm in width.
(5) Even if the printed identifiers are same, but if the printed sheets are different, human eye sight can easily recognize that each of microscopic shape of identifiers magnified and photoed by mobile camera phone is mutually different
(6) Even if the identifier is magnified and photoed under different light conditions, with different microscopes, and with different mobile camera phone, but if the printed sheet is same, each of microscopic shape of identifiers keeps the same feature and human eye sight can easily recognize that each of microscopic shape of identifiers magnified and photoed is mutually same.

The problem is whether or not it is possible to print actually such an identifier mark that satisfies all of 6 requirements mentioned above. So far if the professional people in the print industry observe shape of microscopic patterns of print ink magnified by microscope, they are certainly aware that the shape has respectively different feature. However even professional people in printing industry have not imagined that with such microscopic patterns of print ink even ordinary people can authenticate an article with high accuracy only with ordinary simple equipment and ordinary communication method. The clear evidence for that they have not imagined is the fact that although microscopic identifier mark is perfect and ultimate identifier which is absolutely one and only one existence, inexpensive, and easily operated by anyone for article authentication system, such an authentication system has not been realized yet. Nobody has realized that 6 requirements mentioned above can be satisfied. We have realized it in this invention.

### 6. Evidence of the identifier, No.1 (money bill)

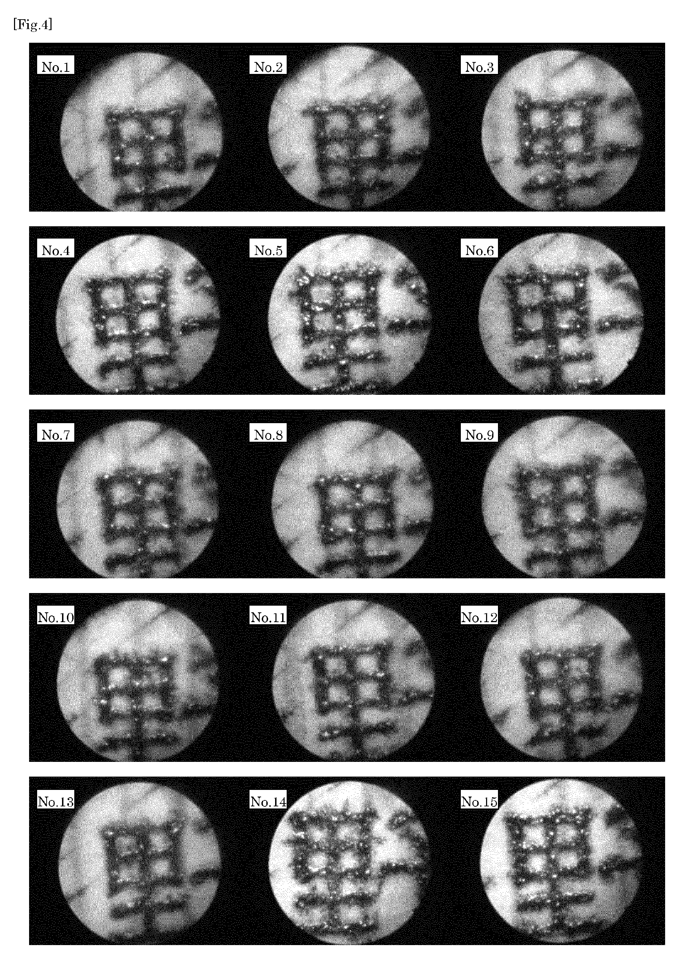

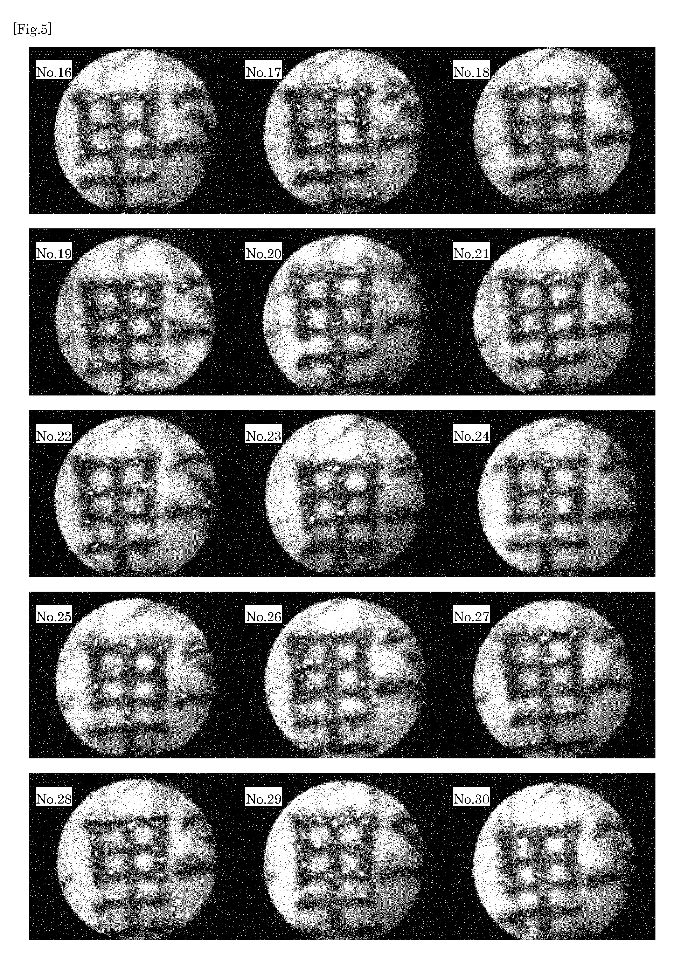

Fig.4 and Fig.5 are images on the display of a mobile camera phone for the minute mark magnified by small microscope and photed by the mobile camera phone at the same location on a money bill which is thought the most precise printing. Inside of the circle is microscope observation field viewed on the display of the mobile camera phone. Magnification is 30∼40. If the invented identifier can be evidenced with the most precisely printed Japanese money bill, it could be also evidenced with all of the other money bills which have less print preciseness and larger randomness of the shape of printed minute mark. Fig.4 and Fig.5 are the pictures magnified by microscope and photoed by a mobile camera phone for 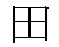 of upper part of 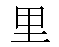 in 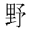 of 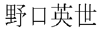 in all different 30 money bills of 1,000 yen. Though they look same by eye sight and are printed with very precise method for money bill, each shape of 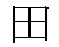 is significantly different mutually. It has been evidenced by these magnified pictures that there is none of the same shape of printed 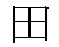 among them.

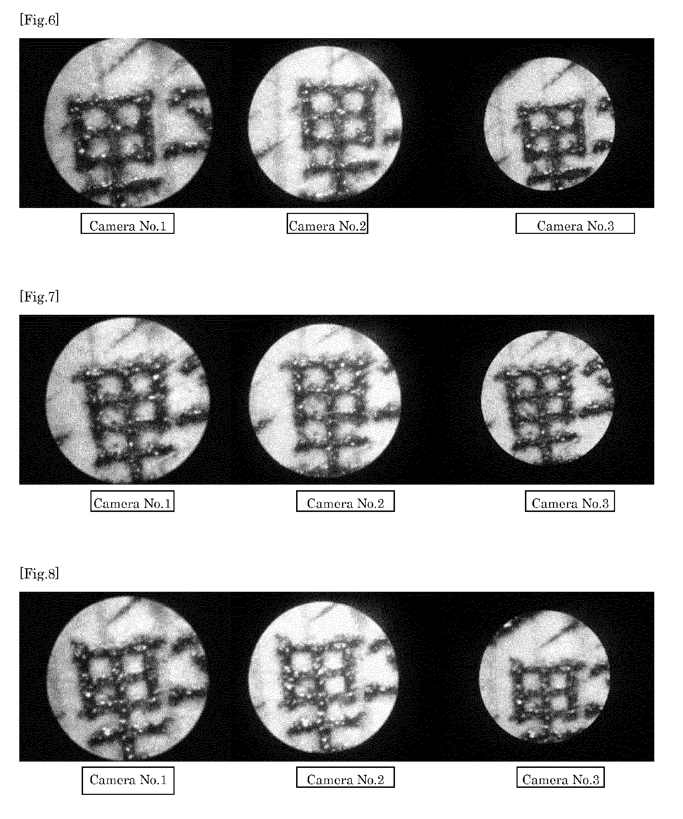

On the other hand, if the printed sheet is same, the shape of the magnified identifier mark must be same even if the mobile camera phone to photo it is different, the lighting condition to photo it is different, and the magnification of the identifier mark is different. Otherwise the authentication of genuine articles cannot be realized. Fig.6, Fig.7 and Fig.8 are the images of 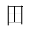 of upper part of 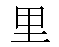 in 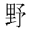 of the same 1,000 yen money bill photoed by different mobile camera phones with different lighting conditions and further with different magnification.
It is clearly found that if the money bill is the same one, all images of 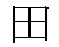 have same feature of shape. It is clear that the difference of microscopic shape for the respective printed identifier mark in Fig.4 and Fig.5 is not made by the difference of type of microscope and/or camera, nor lighting conditions for photographing, but by the difference of printed matters themselves with respective microscopically different identifier mark. This is the reason why ordinary people can easily authenticate even a money bill which is printed by very high precision printing technology. The microscope used there is an off-the-shelf general purpose pocket type one with magnification of 30 like a low price toy, and the mobile camera phone used is similarly the one sold in a shop in general market.

It has been found in this invention that even by the equipment ordinary people generally have at hand or for them to be able to easily purchase, ordinary people can easily find that the microscopic shape of the same identifier is different when the same printed matter is of different paper. On the other hand, it has been also found in this invention that even by such equipment ordinary people can easily find that the microscopic shape of the identifier is same when the same printed matter is of same paper. It could only be guessed that nobody has thought of that there is so significant difference among microscopic shape of identifier and such difference can be easily recognized even by ordinary people.

### 7. Evidence of the identifier, No. 2 (letter of ink jet printer)

We will evidence the same unique features for a minute identifier mark of any shape printed by an ink jet printer as for thousand yen money bill described in article 6 above.

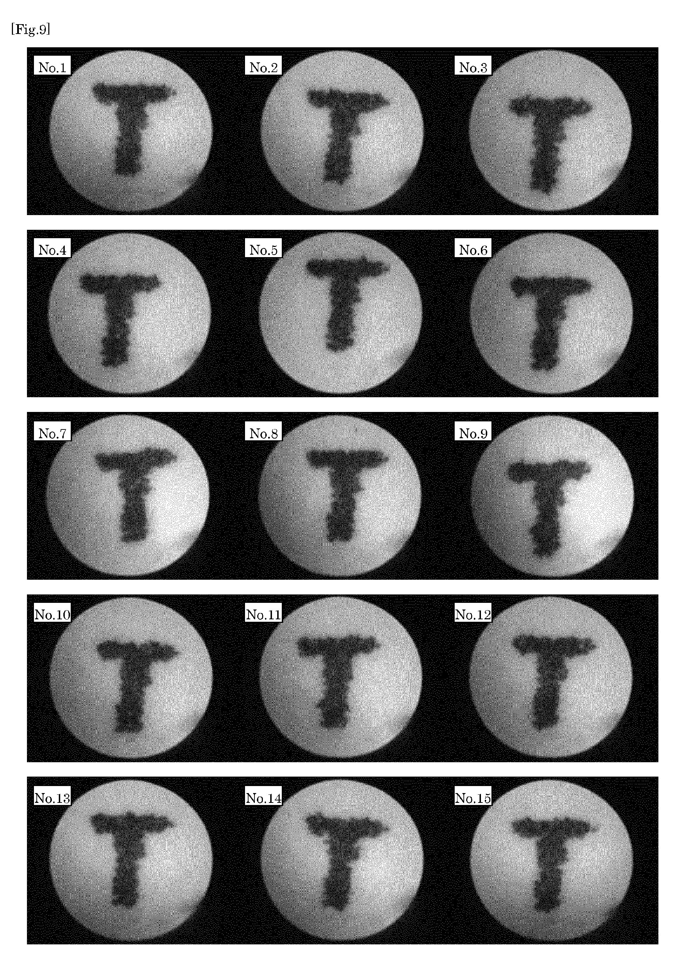

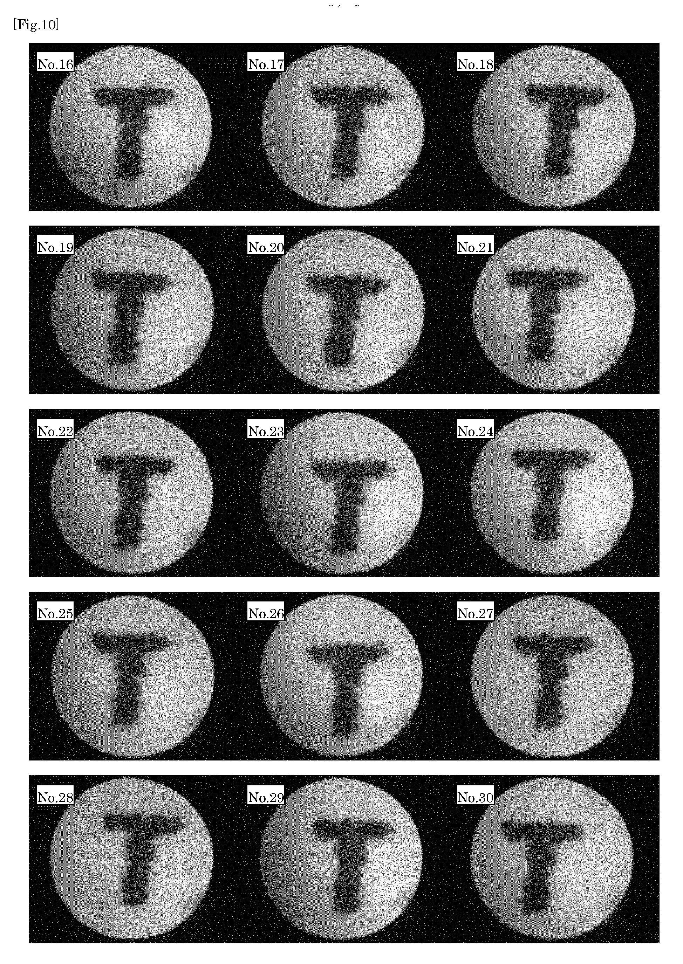

Fig. 9 and Fig.10 are the pictures of the same 30 letters of T with width of 0.6mm as an identifier mark printed by an ink jet printer, magnified by microscope, and photoed by a mobile camera phone. It is clearly found that although each of them looks same in shape by eye sight, each microscopic shape of them magnified is significantly different mutually if the printed T is different. It is clear by these magnified pictures that there is none of same shape printed. This result is exactly same as for the observation of 1,000 yen money bill.

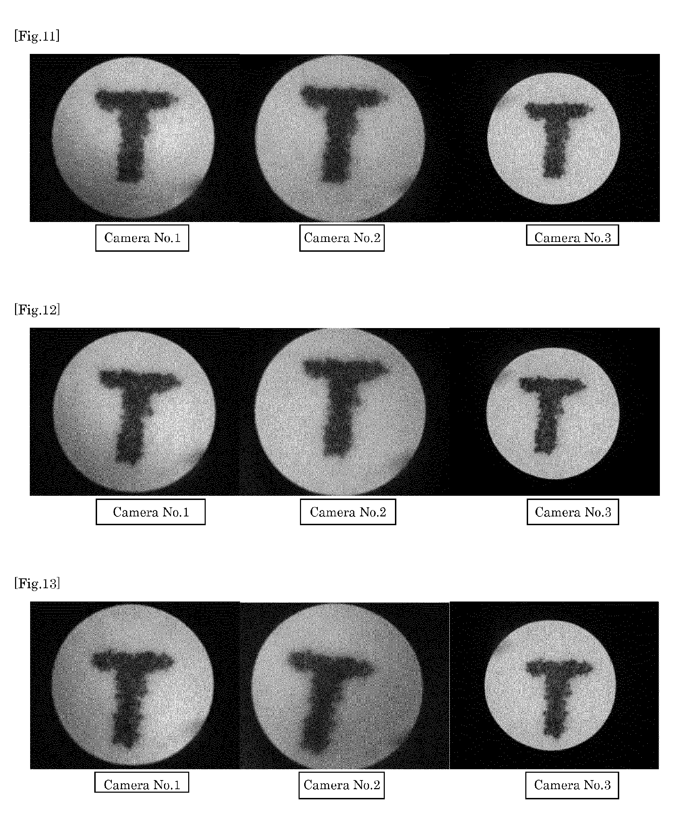

On the other hand, if the printed sheet is same, the shape of the magnified identifier mark must be same for article authentication even if the mobile camera phone to photo it is different, the lighting condition to photo it is different, and the magnification of the identifier mark is different. Otherwise the authentication of genuine articles cannot be realized. Fig.11, Fig.12, Fig.13 clearly evidenced that the identifier has such feature.
In summary, it is easy that same printed matters can be easily authenticated with high accuracy in regard to whether it is the same sheet or the other by either judgment of eye sight or judgment of shape coincidence index computed by image processing using various mathematical methods, both by compering 2 images since the printed shape feature of each of magnified images is significantly different. Now it has been verified that the identifier mark can be printed which satisfies 6 prerequisites described earlier.

### 8. Reproduction probability for the printed microscopic identifier

The microscopic shape of the identifier cannot be controlled by human so that no reproduction of the same shape of the identifier is basically realized. However theoretically there should be some probability for reproduction by chance. Research for such probability is shown below. The difference of shape is the difference of microscopic shape of printed entire identifier mark.
However, practically authentication can be enough done only by comparing the microscopic shape of contour lines for the corresponding same location and same part of 2 identifier marks, and observing the difference of only the shape of said 2 contour lines. Difference for microscopic shape of inside of the contour line may be observed and considered, but high accuracy for authentication can be obtained even only by the difference of shape of contour lines. The reason for that is described below.

Considering the shape of T in Fig.9, the difference between the shapes of respective contour lines is detected by recognizing the difference by comparing between the corresponding same parts of the contour line in the magnified shapes of contour lines. 2mm is enough length of contour line for human eyes to sense the difference of shape. Human eyes can enough sense the up and down along the contour line if the sensing pitches is more than 2mm. The entire length of contour line of magnified shape T is about 100mm so that the number of the pitches is about 50. There are 2 cases of "same" or "not" comparing the contour line level of a certain pitch to the previous and neighboring one when the contour line is observed along the 50 pitches. The number of sequence cases is the number of permutation which is 2 to the power of 50. It is astronomically large number of 1,000 trillion. It means that probability for the same microscopic shape of contour line to be printed is one to 1,000 trillion. Further if we consider not only 2 cases of whether the level of the pitch is same or not, but also 3 cases of whether it is "same", or "up" or "down", and if we consider further the extent of up and down, the number of shape patterns becomes much larger, almost infinity. Consequently the probability for a microscopic shape along the contour line to be reproduced by chance can be considered to be zero.

The research described above has brought about important result in article authentication. Namely the measuring and comparing object can be simply the microscopic contour line of a minute identifier mark. It is also obvious that the accuracy of authentication is not practically deteriorated even if the contour line of the entire identifier mark is not necessarily observed and compared, but only a certain portion of the contour line of the entire identifier mark is observed and compared. Because, since the probability of reproduction by chance for a microscopic shape of contour line of entire identifier mark is infinitely small so that the probability for some portion of the identifier mark is also infinitely small.

### 9. Superiority features of an identifier of printed minute mark

Features of an identifier of printed minute mark are presented below. These features have significantly superior over the ideas described in the precedent patent literature 10 (Japan
Patent Application Publication No. 2005-10581) presented earlier (hereinafter named "the precedent technology") as one of precedent technologies. The precedent technology states that the article authentication is conducted by making the identifier of minute features (random patterns) on the surface of an article which all of articles naturally have and cannot be precisely reproduced, and by comparing the features of minute random gradation patterns on the entire surface of a small area defined in advance to be observed, to the features of the same memorized beforehand.
(1) The precedent technology needs a high magnification microscope to find the specific features of the surface in the case of such an article as with smooth surface since the surface feature is very minute.
   In comparison with the above technology, the technology of this applied patent needs only a low magnification microscope to observe microscopic shape features regardless of the size of microscopic surface features of object articles as far as the printed small identifier mark has more than a certain size.
(2) The precedent technology observes features of minute gradation on entire surface of a small area for observation. However the boundary of the small area to be observed is not defined. It is practically impossible to define such boundary in the case of microscopic space.
   In comparison with the above technology, the technology of this applied patent observes only a printed mark with a certain shape and more than a certain size so that the boundary of observation object is clear.
(3) In regard to the precedent technology, the features of minute gradation on entire surface of a small area for observation are the gradation in the area. To clearly judge the features of gradation in the area, a microscope of high magnification and resolution is needed and the volume of information data to be compared for judgment is large.
   In comparison with the above technology, while observation and comparison for the technology of this applied patent may be done in regard to the difference of microscopic shapes of the printed identifier mark with a certain size including the inside of the identifier mark, even if observation and comparison is done only in regard to contour lines of the identifier mark with a certain shape, the accuracy of authentication of articles will practically not be deteriorated. Being different from comparison of the gradation in an area, the comparison of contour lines is for the shape of line so that even if there is some dim in the line, the error for the features in regard to the shape is small. So, the authentication judgment can be done with high accuracy even with small volume of information data. As a result, needed microscope can be of low magnification and resolution.
(4) The area of observation for the precedent technology is extremely minute in order for its features to emerge since specific feature of surface is extremely minute in the case of smooth surface articles. Consequently in order to define the extremely minute area of observation as the identifier for article authentication, it is needed to set some treatments on the object article and observation equipment such as fitting, abutment, marking for positioning. Further microscope of high magnification and resolution is needed. It is practically impossible for ordinary people to execute these operations.
   In comparison with the above technology, in the case of the technology of this applied patent, the area of the identifier mark is easily detected since the printed small identifier mark and its features of microscopic shape have a size bigger than certain level, and the identifier mark has surrounding area with no ink or printed guide mark. Meanwhile in the case of the precedent technology, when the area of observation is too small, even if some guide marks are printed, such guide marks are too rough for the microscope field to reach to the observation area.
(5) When a identifier marks are compared, it is needed to precisely define the boundary, upper and down side, left and right of the mark to be observed. Then those so defined are made identical and corresponding respective parts of the identifier shapes are to be compared.
   In the case of the precedent technology, the identifier mark is the entire surface of observation area on the object article so that it should be difficult to make identical the boundary, upper and down side, and respective microscopic location in the observation area for the identifier marks to be compared. How to solve them is not clearly described in the precedent technology.
   In comparison with the above technology, in the case of the technology of this applied patent, it is easy to detect and find the printed identifier mark, to define the boundary, up and down side, left and right for the mark, and to make identical the respective microscopic locations in the observation area of the identifier marks to be compared.
(6) The precedent technology observes features of minute gradation on entire surface of a small area for observation.
   In comparison with the above technology, in the case of the technology of this applied patent, even if microscopic entire contour lines do not coincide, as far as any identical parts of the contour lines with more than a certain ratio of entire contour lines coincide, the identifier marks can be judged to be same with high accuracy. Because ,since the probability of coincidence by chance for entire contour lines is almost zero, the probability of coincidence by chance for a part of contour line with more than a certain ratio of entire contour line is also almost zero. As a result, the comparison can be only for any part of contour lines with more than a certain ratio of entire contour lines. Consequently the time for comparison and judgment of authentication can become short. Also the identifier mark is resistive against deterioration of the identifier mark.
(7) The precedent technology observes features of minute gradation on entire surface of a small area for observation and authenticate object article. Such features are difficult to be long kept since they are fragile against secular change, force, and dirt. Consequently, a covering guard of some transparent material is needed. However if the covering guard is scratched, the scratched part is taken as one of features for the identifier leading error judgment.
   In comparison with the above technology, in the case of the technology of this applied patent, since the observation and comparison is sufficient just for a part of the entire identifiers, partial deterioration of the identifier mark is not harmful. So, covering guard of transparent material is not necessarily needed for the technology of this applied patent.

As described above, printed minute identifier mark has surpassing features. If these features are made use of, even ordinary people can easily authenticate articles. This is exactly the invention of the technology of this applied patent. This is completely different technology from those to date.

### 10. Summary of patent applied invention for article authentication system using printed minute identifier mark

As described earlier in chapter 5 "Requirements of identifier mark for ordinary people to easily authenticate article", we have evidenced the identifier mark to be able to be printed and realize 6 prerequisites. We have invented an article authentication system utilizing such phenomena which can be easily operated by ordinary people with high accuracy. Summary of the invention is presented below.

### 10.1 Selection of size, shape, paper, ink or printing materials for the identifier mark

First of all, the size and shape of minute identifier mark for article authentication, printing medium, and printing ink are selected and decided to satisfy 6 prerequisites as described earlier in chapter 5 " Requirements of identifier mark for ordinary people to easily authenticate article".

To compare the identifier marks, their shapes need to have clear upper and lower sides. By the combination of the shape, printing medium, ink, the microscopic shapes of the contour lines of printed identifier marks are affected and mutually different for each of printed sheets. As the printed microscopic shape cannot be controlled by human, the combination for desired shapes must be selected by experiments of try and error, which can be done very easily. Experiments should be done with the identifier mark size of from 0.7∼0.8mm to smaller size. Then the combination to satisfy above prerequisites can be easily found.
By the way, printing work generally requires high accuracy by using printing patterns, dots, inks and papers to control and minimize microscopic random shape. On the contrary the applied patent makes use of uncontrollability of microscopic shape of contour line so that the direction is opposite.
In the description so far, the method to make a minute identifier mark and material to make it is printing and its ink. However the methods and materials can be any method and material as far as the microscopic shape made cannot be controlled, e.g., ballpoint pen, fountain pen, pencil, paint. The situation is same in following description.

### 10.2 Summary of article authentication system

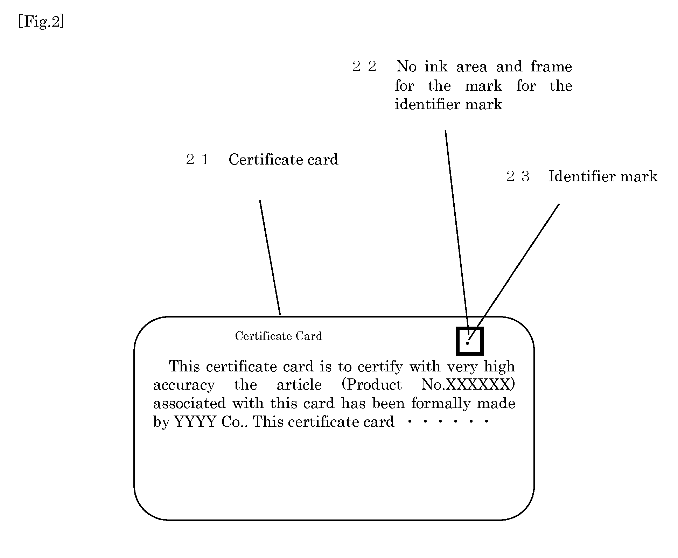

Actual details of an example are described below.
The identifier mark is printed at any pre-defined location on the object articles or the associated certificates (correctively named "object medium"). Further an area with no ink is set surrounding the identifier mark to be easily pointed out and along the external edge of the area a heavy line is printed. For example refer to the frame at upper right end of the certificate and the mark in the center of the frame in Fig.2 (a certificate card). The size of the identifier mark is so small that some guide mark is needed around it to be easily found by eye sight. When the identifier mark is photoed by digital camera, the area with no ink and the frame are needed for the identifier mark to be easily detected and magnified by microscope.
From now on, the case of no ink area and frame as a guide mark is described. However generally it is needed for the identifier mark to be easily detected only by setting the surrounding area with color largely different from it, or by any other methods for eye sight to easily and precisely find the location of the identifier mark. Examples are by the tip of an arrow pattern, or by printed many small arrow patterns all converging to the location, or by specific part of or specifically defined location from the printed specific letters or patterns.

Then targeting the center of the frame and the area with no ink, the identifier mark and a part of the area with no ink is magnified by microscope.
Then the image of microscopic shape of the magnified identifier mark is photographed by digital camera phone or WEB camera.
Then the photographed image is stored in digital storage as database through a computer and is made to be the information for the microscopic shape of the genuine identifier mark. This is named as the master image information. At the same time, the product number of the article is input and stored in the database being associated with the master image.
Then the object article to be authenticated is shipped to the market associated with the identifier mark. The identifier mark is printed if it can be directly printed on the object article. For example, the identifier mark is directly printed on securities, paper money, certificates, packing boxes, medicine tablet sheets.

When ordinary people want to personally authenticate by themselves the article in the market or held by people, ordinary people transmit its product number of the article to URL of the authentication executer through a mobile phone or PC.
Then the people receive by a mobile camera phone or PC the corresponding genuine master image of the identifier mark transmitted from the database of the authentication executer. The master image is displayed on the screen of mobile camera phone or PC of the people.

The people magnify and observe the identifier mark existing at the center of the marking area on a certificate and compare the shape observed and the shape of the master image received on the display of the mobile phone or PC.

If these shapes coincide in regard to any part of entire contour line with more than a certain ratio of the entire line, the identifier mark is judged to be genuine. If coincidence is not clear, the identifier mark is judged that it is possibly counterfeit.

Meanwhile, if ordinary people want to let an authentication authority judge and authenticate the article, the people photograph by mobile camera phone or digital camera the magnified image of the identifier mark and obtain the magnified image which occupies more than half of the display of the mobile camera phone.
Then they send the image and the product number of the object article to URL of authentication executer through internet.
The authentication executer retrieves the master identifier mark stored in database by the sent product number which then is compared to the image of magnified identifier mark sent from the people

If these shapes of 2 images coincide in regard to any part of entire contour line with more than a certain ratio of the entire line, the identifier mark is judged to be genuine. If coincidence is not clear, the identifier mark is judged that it is possibly counterfeit.

The judgment of coincidence can be done by eye sight at a call center comparing the image of the magnified identifier mark sent with the master genuine image whenever the magnified image of the identifier is sent to the center. The accuracy of this method is considered to be high on account of high capability of human eye sight for image judgment. Or the judgment of coincidence for two images can be done by image processing using various mathematical methods with computers.
Then the result of judgment for coincidence is sent back to the people who sent the image of the identifier mark on their articles.

By constructing the system described above, ordinary people have become able to judge and authenticate a certificate by using simple microscope and mobile camera phone or digital camera and PC.

### 10.3 Various constructs to magnify a minute identifier mark

If a microscope with the enough capacity of magnification and resolution to recognize microscopic features in the shape of the minute identifier mark is embedded in mobile camera phone, such construct is the most desirable. If using some of close-up, loupe, microscope, zoom, finger enlarging on display, all of these functions to magnify the image until recognizing microscopic features in the shape of the minute identifier mark are embedded in a mobile camera phone, such construct is the most desirable. If so, a microscope is not needed separately. In addition to optical microscope or loupe, semiconductor microscope with low cost and very small size has been already developed. If this device is embedded in a mobile camera phone, ordinary people become able to authenticate articles easily and instantly.

Further, in the case of storing the master image of magnified identifier mark, if the digital pixel information can be enough obtained with enough number of pixels in digital camera to recognize the microscopic features of the minute identifier mark for comparison, the digital image can be directly stored for master image without optically magnifying the mark.

### 11. A certificate with the printed identifier mark and associated article can be apart

If the identifier mark and the certificate printed with it is authenticated as genuine and only one existence in the world, the article associated with the certificate is also authenticated as genuine even if the article is not directly authenticated. Because, if a counterfeit article is tried to be sold with genuine certificate by purchasing a genuine article to obtain a genuine certificate, there is only one genuine certificate since its copy is impossible. So there is only one counterfeit article to be able to be associated with genuine certificate. Only one counterfeit article can be sold associated with a genuine certificate so that counterfeit businesses cannot be run. This situation is same regardless of the certificate physically attached to the article or not. It is obvious that physical attachment of the certificate to the article is not necessary.

### 12. The reasons why this invention could not be easily thought of

Let us think about the reasons why this invention which is socially extremely important has not be made much earlier. Let us think about whether or not there is some special difficulty in this invention.

First, there were no needs for special difficult new inventions or developments in any components comprising this invention. In regard to the social needs, damages by counterfeit articles are so large and serious as 100 Cho yen worldwide so that the need for prevention against counterfeit articles is serious. The enterprises and governments spend huge money for the prevention.
Further, the ideal feature of the identifier mark for the article authentication is that the copied identifier mark becomes different one from original one so that it absolutely cannot be copied and it is absolutely one and only one existence in the world. It has been generally known that if the authentication mark has such feature, it will certainly become the ultimate identifier for article authentication. Further if the judgment of genuineness of the identifier mark for article authentication can be conducted by ordinary people, easily, instantly, and with almost no cost, the system with such identifier mark can be the ultimate system to totally prevent counterfeit articles. These must have been easily thought of by anybody. However technologies to meet this serious social need have not been realized yet in the world. We could not find such technology in the databases of Patent Office of Japan, USA and WIPO.

Let us think about the reasons why it has not been realized. Those are listed as follows:
(1) An usual microscope is not usually at hand for ordinary people and cannot be easily used at any time by them. Therefore, it has not been thought of that ordinary people use a microscope for article authentication by themselves.
(2) The area of an identifier mark must be precisely caught in microscope field with accuracy of 0.1mm so that ordinary people have been thought to be unable to easily conduct authentication operation.
(3) In printing technology, the direction of R&D has been to how to minimize randomness of microscopic shape which is humanly uncontrollable and harmful to clearness of printing. So the utilization of randomness is reverse thinking. Printing companies have paid a lot of efforts in R&D to prevent counterfeit articles and to sell the outcomes. The strong thought that humanly uncontrollable microscopic randomness is harm seems to have been a hurdle against reverse thinking to utilize human uncontrollability.
(4) Printing companies have been enough aware of printing feature of microscopic randomness. However the certificate utilizing feature of printing randomness has been simply thought as printing product with small sales size so that printing companies have not thought of big article authentication business utilizing randomness of printing products.
(5) Even if the identifier mark has enough size for eye sight to be able to easily detect it, when it is magnified by microscope up to easily recognizing feature of randomness of each identifier mark and the magnified image is photographed by mobile camera phone and displayed on the screen of the phone, the entire image needs to be within the display. The magnification and resolution of microscope to satisfy this need is unexpectedly not high so that the necessary microscope can be so simple and cheap like a toy with cigarette lighter size. People have not noticed it until now. People have not thought of following 3 facts: (a) only recognizing the difference between microscopic shapes of identifier marks is needed so that only recognizing the difference between those of contour lines is needed and that magnification and resolution of microscope can be enough low. (b) consequently size of microscope can be enough small like cigarette lighter size, (c) consequently microscope can be so cheap as free attachment to a certificate.
(6) It has not been easily thought of that the printed minute identifier mark has such surpassing features for article authentication described in clause 9 (low magnification and cheap microscope/ easy detection of the identifier mark/ easy comparison between identifier marks/ resistive against deterioration).

### Advantageous Effects of Invention

As described earlier, randomness of microscopic shape is unavoidable in minute identifier mark, printed or marked by any other methods (e.g., ballpoint pen, fountain pen, pencil, paint). The microscopic shape of randomness is impossible for human to control. So, each of minute identifier marks has mutually different shape even though how much is it precisely copied or reproduced. Reproduction is absolutely impossible. There are some outputs which are uncontrollable by human. Examples are human signature, random number, randomness of radio wave. However once they are fixed as the identifier mark for an article, the reproduction of those marks is easy.

On the contrary, in the case of minute identifier mark, its microscopic shape has unavoidable randomness which cannot be controlled by human. And if once the microscopic shape is fixed, the same shape can never be reproduced. This is the one and only representation in the world which can never be reproduced. There is no other identifier mark than this identifier mark having this feature in the world so that the randomness of microscopic shape of minute identifier mark is ultimate method for identification of article authentication.
This invention utilizing this feature presents the absolute certificate and absolute individual identification tag with absolute only one existence for any kind of articles. Further, this is the technology which can be easily operated by ordinary people. Also this invention has no technical hurdles to overcome. Further costs for establishing the system and operation should be very low. Probably there are at present as well as will be in future no other methods than this invention which have all of these features. This invention is the ultimate article authentication method.

At present damages on industries caused by counterfeit articles are serious in the world. The reported size of them is as huge as 60 Chou yen as a total, part of which is 20 Chou yen for medicine. This invention can instantly meet the need since ordinary people can operate easily with very low cost the work for article authentication in this invention. If this invention prevails, counterfeit articles cannot exist and huge costs for preventing counterfeit articles are not needed anymore. With this invention, huge article security businesses will be quickly created and developed in near future in the world. This invention will bring about definitive effects on prevention against counterfeit money paper since ordinary people can easily authenticate their genuineness.

Meanwhile the field of this invention does not cover the market where counterfeit articles are traded as counterfeit.

### Brief Description of Drawings

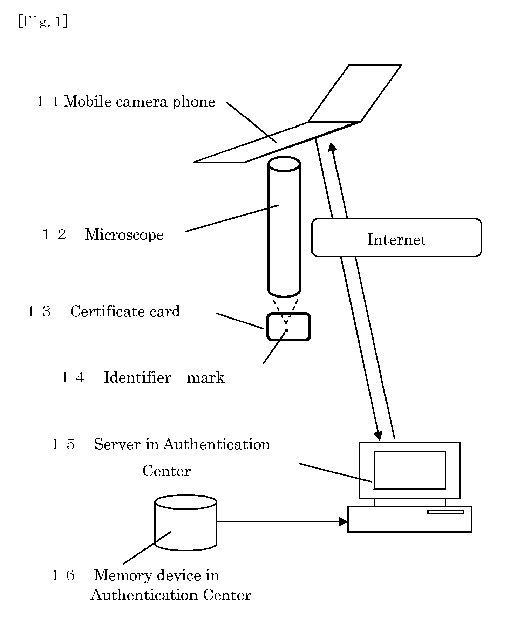

- Fig. 1 :: Concept drawing for the invented article authentication system
- Fig. 2 :: Certificate card
- Fig. 3 :: Storing the shape of the identifier mark on a certificate (Acquiring the master information and storing)
- Fig. 4 :: Microscopic picture of 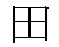 in the letter 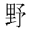 on the surface of 1,000 yen money bill (All different bill) Money bill No.1∼No.15 Mobile camera phone No.1
- Fig. 5 :: Microscopic picture of 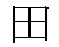 in the letter 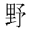 on the surface of 1,000 yen money bill (All different bill) Money bill No.16∼No.30 Mobile camera phone No.1
- Fig. 6 :: Microscopic picture of 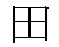 in the letter 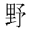 on the surface of 1,000 yen money bill (All same bill) Money bill No.1 Mobile camera phone No.1∼No.3
- Fig. 7 :: Microscopic picture of 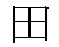 in the letter 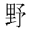 on the surface of 1,000 yen money bill (All same bill) Money bill No.2 Mobile camera phone No.1∼No.3
- Fig. 8 :: Microscopic picture of 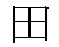 in the letter 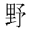 on the surface of 1,000 yen money bill (All same bill) Money bill No.3 Mobile camera phone No.1∼No.3
- Fig. 9 :: Microscopic picture of minute letter T (width is about 0.7mm) printed by an ink jet printer (All different letter T) T of No.1∼No.15 Mobile camera phone No.1
- Fig. 10 :: Microscopic picture of minute letter T (width is about 0.7mm) printed by an ink jet printer (All different letter T) T of No.16∼No.30 Mobile camera phone No.1
- Fig. 11 :: Microscopic picture of minute letter T (width is about 0.7mm) printed by an ink jet printer (All same letter T) T of No.1 Mobile camera phone No.1∼No.3
- Fig. 12 :: Microscopic picture of minute letter T (width is about 0.7mm) printed by an ink jet printer (All same letter T) T of No.2 Mobile camera phone No.1∼No.3
- Fig. 13 :: Microscopic picture of minute letter T (width is about 0.7mm) printed by an ink jet printer (All same letter T) T of No.3 Mobile camera phone No.1∼No.3

### Description of Embodiments

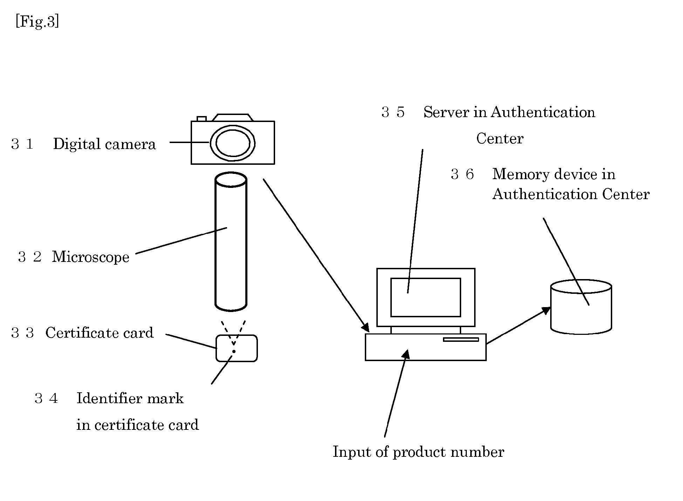

One example of embodiments to realize the invention is described below.
(1) The manufacturer or distributer or person consigned by them makes a certificate for genuine article by printing the minute identifier mark, setting an area with no ink surrounding it, and printing a frame of heavy line along the external edge of such area as shown in Fig.2.
   Since the width of the identifier mark is as small as about 0.2∼0.8mm, the area with no ink (and also a frame around it may be set) is set so that the identifier mark can be easily detected. The shape of the identifier mark can be any form as far as upside and downside as well as lift side and right side are easily recognized. The identifier mark can be either single or multicolor. In any case the microscopic shape of the printed minute identifier mark cannot be humanly controlled.
   The width of the area of no ink should be only more than the size that the identifier mark can be easily detected by eye sight. However practically it is desirable that the width is as large as 5 times of the identifier mark for it to be striking appearance. Too much area of no ink is, however, would make the mark difficult to be easily detected. So, some guiding marks such as many small arrows may be printed in the area surrounding the identifier mark so that a microscope can easily access to the identifier mark
   The printing ink and printing medium are selected for them to have appropriate affinity between them so that the appropriate spread of ink is made by permeation of ink. Printing machine can be anyone of offset, photogravure, letter press, screen, and ink jet. The product number of the object article is printed on the certificate with the identifier mark.
   As described in Fig.2, the method is printed on the certificate card to acquire through the home page of authentication center how to authenticate an article by a mobile phone as follows:
   "This card certificates with high accuracy the associated article( Product No. ○○○○○○ ○○) has been formally produced by the company○○○. If this card is authenticated as genuine, the associated article is also genuine with almost 100% accuracy. How to authenticate the card as genuine is described as follows. Download in a mobile camera phone the home page of the authentication center of Company○○○, and operate as directed in the home page. URL of the authentication center is http://www.alacd. • • • . If you want to confirm whether this URL is genuine or not, contact by phone the public information center of Company○○○. If the phone number is written here, such number could be used by a counterfeiter so that please search for the phone number by yourself.
   First, send the Product number. The authentication center instantly sends back the magnified genuine minute identifier mark corresponding to the article concerned which is displayed on the screen of a mobile camera phone. Please compare the shape of this mark to the shape of the minute mark printed in the frame at the upper right corner of this certificate card after it is magnified by a microscope. If about ○○% of entire contour line of the minute marks have similar shapes, the identifier mark in the certificate card can be considered as genuine. If not, it cannot be considered as genuine.
   If you want the authentication center to judge genuineness of the identifier mark in the certificate card, please send through a mobile camera phone or PC its image after magnifying by microscope and photographing by a mobile camera phone or web camera. The result of judgment for genuineness is instantly sent back to you."
   As shown in Fig.3, a minute identifier mark is located at the center of the area with no ink confined by a frame of heavy line printed on a certificate card (sign 33). The manufacturer of the article or the distributer or the person consigned by them magnifies by a microscope (sign 32) the minute identifier mark and a part of its surrounding area with no ink and photographs by a digital camera (sign31) the magnified image.
   The identifier mark is magnified to the extent that it occupies more than half of the display of ordinary mobile camera phone. Such magnification of microscope is around 30∼50. Then the magnified and photographed image of identifier mark is transmitted to a server (sign35), and stored in a memory device (sign36) as the database of formal and genuine identifier mark called as master image. At the same time the product number is also input and stored in the database associated with the identifier mark. The certificate card is associated with the article where physical attachment between the certificate card and the article is not necessarily needed. Then the article is shipped to the market.
(2) The article is distributed in the market. When its purchaser or holder or distributer of ordinary people (hereinafter called "ordinary people") wants to know whether the article has been made by the formal and legitimate producer, they can authenticate the article by the procedures described below.
   Explanation is made by Fig, 1.
   The product number printed on the certificate card associated with the article is transmitted by a mobile camera phone to the printed URL (or by reading the printed QR code the URL is automatically connected) of the authentication center.
   The corresponding master image of the identifier mark is transmitted back from the database of authentication center, and is received by the mobile camera phone or PC, and is displayed on the screen.
   The minute identifier mark located at the center of the marking area on the certificate card is magnified by a microscope.
   The microscopic shape thus magnified and the received one of the master image is compared along with their contour lines.
   If the microscopic shape of contour line of the former coincides with that of the latter in any part of more than certain ratio, the certificate card is judged as genuine. If not, the certificate card is judged as counterfeit with high possibility.
   If ordinary people want an authentication center to authenticate an article, they conduct the following procedures sent together with the master image of the identifier mark. "Magnify by a microscope the minute identifier mark printed around the center of the frame of heavy line on the upper right corner of the certificate card and display the magnified image on the screen of a mobile camera phone. Magnify it to the extent that the image occupies more than half of the screen of the phone. How to do it specifically is described in detail below.

### How to magnify by a microscope and photograph by a mobile camera phone the identifier mark.

### A. In case of using an ordinary microscope at hand (in case of not using a pocket microscope associated with the certificate)

The desirable type of microscope is stereoscopic one which uses reflected light. Adjust magnification of microscope, focus, and photograph for the identifier mark, the image of which is displayed on the screen of the camera occupying more than half of the screen and then release the shutter..

### B. In case of using a pocket microscope associated with the certificate

The pocket microscope is installed with cells and LED lamp. Turn on the switch of the light. At the bottom of the pocket microscope a weak adhesive is fixed to hold the location relation between the microscope and the identifier mark. Adjust the location relation for the identifier mark to be viewed at the center of microscope field. At that time a little reclining the microscope is needed for the all bottom not to be touched on the certificate. Then upright the microscope and push onto the certificate sheet to fix the microscope field. Then viewing the magnified identifier mark through a mobile phone camera from a high level, approach the phone camera to the microscope until touching it. The magnified image of the identifier mark is displayed on the screen. Photo it and send it to the authentication center. The messages "Wait a little while" or "Turn off the mobile phone. The result will be sent in a few minutes" is shown.

As described above, the magnified identifier mark on a certificate card displayed on a mobile camera phone is transmitted to a server of an authentication center through internet and received there. This image and the master image stored together with the product number in database of the authentication center are compared. Comparison and judgment of coincidence can be done either by eye sight of an operator in the authentication center or computing the indicator of shape coincidence by image processing using many kinds of mathematical methods.

By the method described above, if a certificate card is the one formally and legitimately made, authentication of the card can be made with high accuracy. Even though the transmitted identifier mark is partially damaged, if its portion of more than a certain ratio remains, authentication can be done with high accuracy as described in the clause 8 of Solution to Problem, i.e., Reproduction Probability for the Printed Microscopic Identifier. The accuracy will be almost 100% with eye sight. If the image received by the authentication center and the master image coincide, such message is transmitted back as "This certificate card is genuine." by the authentication center. If not, the message is such as "This certificate may not be genuine with high probability." By receiving the messages, ordinary people can obtain the result of authentication as conducted by a professional.

The accuracy of judgment is almost 100%. Because, the size and shape of the identifier mark, its print pattern or its size and pitch of dots, its color, ink kind, printed medium, printing machine type, all have been already chosen by try and error to make the mark have clear and strong distinctiveness feature of microscopic shape of the contour line of the identifier mark for easily making difference between the marks with 100% accuracy. It has been easily chosen at experiments.

By constructing the system described above, ordinary people have become able to easily authenticate the minute identifier mark with simple pocket microscope and a mobile camera phone. Though ordinary people can easily obtain the simple and cheap microscope, the manufactures of the articles can also attach it free of or limited charge with the certificate of the article since the cost of the microscope is cheap. By this authentication system, authentication of the article associated with the certificate card with the identifier mark can be done with high accuracy. If a certificate card is authenticated as genuine and one and only one in the world, the article associated with the certificate card is also authenticated as almost genuine. Because, there are no such counterfeiters to purchase genuine articles to obtain genuine certificate cards and to attach them to counterfeit articles and sell the counterfeit articles with genuine certificate cards since the counterfeiters can never make profits.

The above description is in the case of mobile camera phone. However digital camera and PC can present the same functions as the former case since needed functions are photographing the identifier mark, transmitting and receiving its image and display.

### Industrial Applicability

It is said that the damages caused by the counterfeit businesses are as large as US$1,000 in relation to paper money, medicine, brand articles such as bag, wallet, clothes, watch, glasses, electric apparatus, and passport, personal identification card, cash card, credit card, driver's license, car inspection certificate, diploma, securities, certificate for jewelry, pedigree of farm animal or pet. Huge amounts of cost are spent to prevent them. By this invention, these counterfeit articles cannot exist in the market. The outstanding features of this invention are absolute impossibility for the identifier mark of authentication to be copied and easiness for ordinary people to authenticate articles.

For example, if the medicines have the same package and the same shape of tablet and further the same chemical components as of genuine ones, even legitimate producers cannot easily distinguish between the one legitimately produced and the counterfeit one. In that case, if the minute identifier mark of this invention is printed on the package, authentication of the medicine can be instantly conducted. As a result, counterfeit articles cannot exist in the world and the huge costs to exterminate them are not needed.

One of the features of this invention is that ordinary people can operate authentication of articles only with equipment usual or easily obtainable at cheap price, any new technologies are not needed at authentication businesses, and capital investments are little needed, and this authentication businesses can be quickly started. This kind of authentication system has not existed so far.
Meanwhile, this authentication system has no effect against the counterfeit articles sold as counterfeit articles since purchasers from the beginning understand the articles to be counterfeit.

**Reference Signs List**

| | |
|---|---|
| 11 | Mobile camera phone |
| 12 | Microscope |
| 13 | Certificate card |
| 14 | Identifier mark |
| 15 | Server in authentication center |
| 16 | Memory device in authentication center |
| 21 | Certificate card |
| 22 | No ink area and frame for the mark for the identifier mark |
| 23 | Identifier mark |
| 31 | Digital camera |
| 32 | Microscope |
| 33 | Certificate card |
| 34 | The identifier mark in certificate card |
| 35 | Server in authentication center |
| 36 | Memory device in authentication center |

## Claims

1. Method to authenticate an article as genuine or not comprising the steps of:
printing a certain shape with print material on a print medium as an identifier mark to authenticate the print medium;
storing in a memory device the microscopic shape of the adhered print material which is humanly uncontrollable;
reading such microscopic shape of print material adhered on the print medium;
comparing it to the stored microscopic shape mentioned hereinbefore;
judging coincidence or not between both of the microscopic shapes.

2. The method of Claim 1 wherein at the time of reading for a printed identifier mark the microscopic shape of the adhered print material on the print medium, and comparing it to the stored microscopic shape, judgment for authentication of print medium is made based on coincidence of the contour lines of both microscopic shapes with more than a certain ratio of the entire contour line of the identifier mark.

3. The method of Claim 1 and 2 wherein human eyes can easily and correctly detect the location of the identifier mark and recognize it by one or more methods as follow:
around the identifier mark, setting an area with color largely different from identifier mark's color,
defining as the identifier mark a certain part of or a certain location relation of a larger printed letter or pattern as a guide mark than the identifier mark,
around the identifier mark, printing many small arrows guiding the field of view of a microscope to the identifier mark.

4. Method to authenticate an article as genuine or not comprising one or more steps of:
printing the identifier mark described in Claim 1through 3 on a print medium;
photographing the microscopic shape of the adhered print material of the printed identifier mark;
storing the photographed image in the memory device as the master image together with product number of the article;
shipping the articles to the market after printing the identifier mark directly on the articles or printing it on a print medium and associating the print medium to the articles as the certificate;
attaching to the article or its certificate an small microscope to magnify the identifier mark for observation; receiving the image by the authentication center, comparing the images received or after image processing for clearness, with the master image mentioned hereinbefore, judging the genuineness of the identifier mark, and transmitting back the result of judgment to the people requesting authentication, wherein people want an authorized person to authenticate the articles, and they a) magnify the identifier mark to the extent that its microscopic shape of the adhered print material is recognized by magnifying equipment (combination of more than one of loupe, microscope, and close up lens, zoom, microscope, display enlargement, all of a mobile camera phone), b) photograph the magnified image by a mobile phone camera or web camera, c) transmit the image to the authentication center by a mobile phone or PC;
retrieving corresponding master image from the database by the transmitted product number of the article and transmitting it back to the people, wherein people want personally authenticate the articles, and they a) transmit the product number of the article through a mobile phone or PC to the authentication center, b) receive the genuine master image from there, and personally authenticate the identifier mark.
